# EUROPÄISCHE PATENTSCHRIFT

(11) **EP 0 811 035 B1**
(45) Veröffentlichungstag und Bekanntmachung des Hinweises auf die Patenterteilung: **08.09.1999**
(21) Anmeldenummer: 96905780.1
(22) Anmeldetag: 22.02.1996
(51) Int. Cl.: C08K 9/04, C08K 9/06

(54) **OBERFLÄCHENMODIFIZIERTE FÜLLSTOFFZUSAMMENSETZUNG**
SURFACE-MODIFIED FILLER COMPOSITION
COMPOSITION DE CHARGE A SURFACE MODIFIEE

(30) Priorität: 23.02.1995 CH 53095
(43) Veröffentlichungstag der Anmeldung: 10.12.1997
(73) Patentinhaber: MARTINSWERK G.m.b.H., für chemische und metallurgische Produktion, D-50127 Bergheim (DE)
(72) Erfinder: METZEMACHER, Heinz-Dieter, D-50737 Köln (DE); SEELING, Rainer, D-50126 Bergheim (DE)
(74) Vertreter: Weinhold, Peter, Dr.
(86) Internationale Anmeldenummer: EP9600743
(87) Internationale Veröffentlichungsnummer: WO9626240

(56) Entgegenhaltungen:
- EP-A- 0 292 233
- DE-B- 2 659 933
- DATABASE WPI Derwent Publications Ltd., London, GB; AN 77-56441Y XP002005662 & JP,A,52 076 354 (ASAHI CHEMICAL IND KK) , 27.Juni 1977

## Beschreibung

Die Erfindung betrifft eine oberflächenmodifizierte Füllstoffzusammensetzung, deren Verwendung zur Flammfestausrüstung von Polymeren sowie die daraus hergestellten flammgeschützten Polymere.

Es ist seit einiger Zeit bekannt, halogenfreie flammhemmende Füllstoffe wie z. B. Magnesium- oder Aluminiumhydroxid zum Zweck der optimalen Einarbeitung in Polymere an der Füllstoffoberfläche zu beschichten. Dies konnte z. B. mit Salzen von Fettsäuren gemäss DE-PS 26 59 933 oder z. B. mit Säuregruppen enthaltenden Polymeren gemäss EP-A 292 233 geschehen.
Wesentliche Voraussetzung für diese Oberflächenbeschichtungen war regelmässig ein hochwertiges Füllstoffmaterial mit exakt definiertem Eigenschaftsprofil (DE-PS 26 59 933). Solch hochwertige Füllstoffmaterialien konnten aufgrund ihres relativ hohen Preises schwerpunktmässig nur für Spezialanwendungen eingesetzt werden, obwohl ein grosser Bedarf an hochwertigen halogenfreien, flammhemmenden Füllstoffen auch für klassische Anwendungen wie z. B. für Kabelmassen besteht.

Es stellte sich folglich die Aufgabe, Füllstoffzusammensetzungen so zu modifizieren, dass auch mit qualitativ minderwertigeren und damit preislich vorteilhafteren Füllstoffen optimale Eigenschaften im Kunststoff erzielt werden können.

Die Aufgabe konnte gelöst werden mit den oberflächenmodifizierten Füllstoffzusammensetzungen gemäss Anspruch 1.

Als halogenfreie flammhemmende Füllstoffe werden Hydroxide des Aluminiums und / oder Hydroxide des Magnesiums gegebenenfalls in Mischung mit Oxiden des Aluminiums, des Magnesiums, des Titans oder des Zirkoniums oder mit weiteren Füllstoffmaterialien wie z. B. Calciumcarbonat, Talkum oder calcinierte oder nicht calcinierte Clays eingesetzt.

Geeignete Hydroxide des Aluminiums sind z. B. natürliche Al(OH)₃-haltige Materialien wie z. B. Hydrargillit oder Gibbsit, (AlO(OH)ₓ)-haltige Materialien wie z. B. das Böhmit oder synthetische Aluminiumhydroxide wie sie z. B. unter dem Warenzeichen Martifin® oder Martinal® von der Martinswerk GmbH in Bergheim vertrieben werden.

Geeignete Hydroxide des Magnesiums sind z. B. natürliche Mg(OH)₂-Typen wie z. B. das Brucit oder Seewasser-Typen, natürliche Magnesiumhydroxycarbonate wie z. B. Dawsonit, Huntit oder Hydromagnesit oder synthetische Magnesiumhydroxide wie sie z. B. unter dem Warenzeichen Magnifin® von der Magnifin GmbH in Bergheim vertrieben werden.

Als Oxide des Aluminiums, des Magnesiums, des Titans oder des Zirkoniums können die handelsüblichen Oxide verwendet werden. Je nach gefordertem Eigenschaftsprofil im Kunststoff wird ein Hydroxid des Aluminiums und / oder ein Hydroxid des Magnesiums alleine oder in beliebigen Mischungsverhältnissen mit den genannten Oxiden eingesetzt.

Erfindungsgemäss erfolgt die Oberflächenmodifizierung des halogenfreien flammhemmenden Füllstoffs gemäss Variante a) mit einem Fettsäurederivat aus der Reihe der Polymerfettsäuren, der Ketofettsäuren, der Fettalkyl-oxazoline oder -bisoxazoline und gegebenenfalls einem Siloxanderivat oder gemäss Variante b) mit einer Fettsäure und einem Siloxanderivat.

Unter Polymerfettsäuren werden durch Oligomerisierung, wie z. B. durch Di- oder Trimerisierung von entsprechenden Fettsäuren hergestellte Verbindungen verstanden. Geeignete Vertreter sind z. B. die Polystearinsäure, die Polylaurinsäure oder die Polydecansäure.
(Henkel Referate 28, 1992, S. 39ff)

Unter Ketofettsäuren werden ketogruppenhaltige Fettsäuren mit 10 bis 30 C-Atomen verstanden. Bevorzugter Vertreter einer Ketofettsäure ist die Ketostearinsäure. (Henkel Referate 28, 1992, S. 34ff)

Unter Fettalkyloxazoline werden die in 2-Stellung alkyl- bzw. hydroxyalkyl-substituierten Oxazoline verstanden.
Die Alkylgruppe weist dabei zweckmässig 7 bis 21 C-Atome auf.
Die Bisoxazoline sind Verbindungen, die aus den Hydroxalkyloxazolinen durch Umsetzung mit Diisocyanaten synthetisiert worden sind.
Ein bevorzugter Vertreter ist z. B. das Undecyl-2-Oxazolin.
(Henkel Referate 28, 1992 S. 43ff)

Die genannten Fettsäurederivate werden entweder einzeln oder in Kombination in einer Menge von 0,01 bis 10 Teilen vorzugsweise von 0,05 bis 5 Teilen pro 100 Teilen Füllstoff eingesetzt.

Gemäss Variante a) kann zusätzlich in einer Menge von 0,01 bis 20 Teilen vorzugsweise 0,05 bis 10 Teilen pro 100 Teilen Füllstoff ein Siloxanderivat zugesetzt werden.

Geeignete Siloxanderivate sind die Oligoalkylsiloxane, die Polydialkylsiloxane wie z. B. das Polydimethylsiloxan oder Polydiethylsiloxan, die Polyalkylarylsiloxane wie z. B. das Polyphenylmethylsiloxan oder die Polydiarylsiloxane wie z. B. das Polyphenylsiloxan.

Die genannten Siloxane können mit reaktionsfähigen Gruppen wie z. B. Hydroxy, Amino, Vinyl, Acryl, Methacryl, Carboxy oder Glycidyl funktionalisiert sein.

Erfindungsgemäss kann gemäss Variante b) der halogenfreie flammhemmende Füllstoff mit einer Fettsäureverbindung und einem Siloxanderivat behandelt werden. Unter einer Fettsäureverbindung wird bei dieser Variante entweder eine klassische Fettsäure mit zweckmäßig 10 bis 30 C-Atomen, ein Fettsäurederivat davon oder ein- oder mehrfach ungesättigte Hydroxyfettsäure mit zweckmäßig 10 bis 30 C-Atomen verstanden.
Geeignete klassische Fettsäuren sind, z. B. die Stearinsäure, Laurinsäure, Myristinsäure, Palmitinsäure, Ölsäure oder Linolensäure.
Als Fettsäurederivat kann ein Fettsäuresalz oder eine modifizierte Fettsäure wie z. B. das Stearinsäureglycidylmethacrylat eingesetzt werden.
Bevorzugt werden gesättigte Fettsäuren oder Hydroxyfettsäuren bzw. Derivate von gesättigten Fettsäuren eingesetzt.
Die Anwendung der Fettsäureverbindungen erfolgt generell als einheitliche Verbindung oder als Mischung verschiedener Fettsäureverbindungen. Die vorteilhafte Menge liegt ebenfalls in der bei Variante a) für die Fettsäurederivate genannten Bereich.
Um das geforderte Eigenschaftsprofil zu erzielen, ist in Variante b) die Siloxankomponente zwingend.
Als Siloxanderivat können in der genannten Menge die unter Variante a) aufgeführten Verbindungen verwendet werden.
Bevorzugt werden hochmolekulare Polydialkylsiloxane, die gegebenenfalls mit den genannten funktionellen Gruppen funktionalisiert worden sind, eingesetzt.

Zweckmässig kann als Trägermaterial für die genannten Oberflächenmodifizierungsmittel, die zum Teil in flüssigem Aggregatzustand vorliegen, pyrogene Kieselsäuren oder Fällungskieselsäuren verwendet werden.
Bevorzugte pyrogene Kieselsäuren sind die Aerosil®-Typen von Degussa. Bevorzugte Fällungskieselsäuren sind die Sipernat®-Typen von Degussa.
Die genannten Trägermaterialien werden abhängig vom Oberflächenmodifizierungsmittel in einer Menge von 0,1 bis 10 Teilen pro 100 Teilen Füllstoff eingesetzt.

Gegebenenfalls können weitere Verarbeitungshilfsmittel, wie z. B. Stabilisatoren zugesetzt werden.

Zur Oberflächenmodifizierung wird der halogenfreie flammhemmende Füllstoff zweckmässig in einem geeigneten Mischer, vorzugsweise in einem Mischer, der hohe Scherkräfte ermöglicht, mit den erwähnten Coagenzien versehen. Dabei kann die Zugabe in gewählter Reihenfolge in bestimmten Zeitintervallen bei unterschiedlichen Temperaturen und bei den Coagenzien angepassten Prozessparametern erfolgen. Es ist ebenso möglich, eine Vormischung der Coagenzien zusammen mit den halogenfreien flammhemmenden Füllstoffen dem Mischer zuzuführen.

Vorteilhaft kann auch zunächst ein Additivkonzentrat, ein sogenanntes Masterbatch, hergestellt werden, indem nur eine Teilmenge des Füllstoffes mit den betreffenden Coagenzien gemäss dem genannten Verfahren in einem Mischer mit hohen Scherkräften vermischt wird. Dieses sogenannte Masterbatch kann dann auf einfache Weise mit einem technisch weniger aufwendigen Mischaggregat z. B. beim Kunden, mit der entsprechenden Menge zusätzlichen Füllstoffes verdünnt und zum einsatzbereiten oberflächenmodifizierten Füllstoff verarbeitet werden.

Der auf diese Weise modifizierte halogenfreie flammhemmende Füllstoff kann darauf mit dem gewünschten Polymer bzw. mit den gewünschten Polymeren nach gängigen Methoden zu einem Compound verarbeitet werden.
Als Compoundieraggregate bieten sich dafür handelsübliche Mischaggregate an, wie z. B. Ein- oder Doppel-Schneckenkneter, Ko-Kneter, Innenmischer oder ein FCM (farrel continuous mixer).

Der erfindungsgemäss oberflächenbehandelte halogenfreie flammhemmende Füllstoff ist für die Flammfestausrüstung von Polymeren bevorzugt von thermoplastischen Polyolefinen und thermoplastischen Elastomeren wie z. B. Polyethylen und seine Copolymere, Polypropylen, EVA und seine Copolymere, Polyamide und seine Copolymere, aliphatischen Polyketonen oder Polyestern geeignet.

Üblicherweise werden die oberflächenbehandelten Hydroxide des Aluminiums in Polymeren eingesetzt, die bis ca. 180 °C verarbeitbar sind.
Geeignete Vertreter solcher Polymere sind insbesondere thermoplastische Olefine wie z. B. EVA und seine Copolymere oder Polyethylen und seine Copolymere oder auch Gummimischungen.
Die oberflächenbehandelten Magnesiumhydroxide dagegen werden in der Regel im Hochtemperaturbereich, d. h. in Polymeren, die ab 180 bis 300 °C verarbeitbar sind, vorzugsweise in thermoplastischen Polyolefinen oder thermoplastischen Elastomeren wie z. B. Polypropylen eingesetzt.
Gegebenenfalls können auch Mischungen der genannten Füllstoffe für die
Flammfestausrüstung der genannten Polymere eingesetzt werden.

Je nach gefordertem Eigenschaftsprofil können den genannten Füllstoffen ein oder mehrere Oxide des Aluminiums, des Magnesiums, des Titans oder des Zirkoniums zugemischt werden, um z. B. Abriebverhalten, Härte oder Bewitterungsverhalten zu steuern.

Der Gehalt an oberflächenbehandeltem Füllstoff in der betreffenden Polymermatrix bewegt sich, abhängig von dem gewünschten Grad an Flammfestigkeit, in der Regel zwischen 5 und 90 Gew.-%, vorzugsweise zwischen 20 bis 70 Gew.-%.

Die genannten Füllstoff-enthaltenden Compounds können zusätzlich faserförmige Verstärkerstoffe enthalten.
Zu den Faserstoffen zählen beispielsweise Glasfasem Steinfasern, Metallfasern, polykristalline keramische Fasern, einschliesslich der Einkristalle, den sogenannten "whiskers", ebenso alle aus synthetischen Polymeren herrührenden Faser, wie z. B. Aramid-, Kohlenstoff-, Polyamid-, Polyacryl-, Polyester- und Polyethylen-Fasern.

Falls gewünscht, können die Compounds mit geeigneten Pigmenten und / oder Farbstoffen oder mit weiteren anwendungsbezogenen Zusätzen oder Hilfsstoffen versehen sein.

### Beispiele

### Beispiel 1

1000 kg Magnesiumhydroxid (Magnifin H 5 / Martinswerk GmbH, Bergheim, Deutschland) wurden in einem Intensivmischer mit 10 kg Polymerfettsäure (Pripol 3505 / Unichema), während 12 min vermischt. Danach wurde das auf die beschriebene Weise modifizierte Magnesiumhydroxid ausgetragen.
Das erhaltene Produkt wurde darauf mit einem Polypropylen-Homopolymer (Vestolen P 8400, Hüls) in einem Einschneckengerät so zu einem Compound verarbeitet, dass der Anteil an Füllstoff 65 Gew.%, der Anteil Polymer 35 Gew.% beträgt.

### Beispiel 2

1000 kg Magnesiumhydroxid (Magnifin H 5 / Martinswerk GmbH, Bergheim, Deutschland) wurden in einem Intensivmischer mit 12 kg Ketostearinsäure während 32 min vermischt. Danach wurde das auf die beschriebene Weise modifizierte Magnesiumhydroxid ausgetragen. Das erhaltene Produkt wurde darauf mit einem Polypropylen-Homopolymer (Vestolen P 8400, Hüls) in einem Einschneckengerät so zu einem Compound verarbeitet, dass der Anteil an Füllstoff 65 Gew.%, der Anteil Polymer 35 Gew.% beträgt.

### Beispiel 3

1000 kg Magnesiumhydroxid (Magnifin H 5 / Martinswerk GmbH, Bergheim, Deutschland) wurden in einem Intensivmischer mit 10 kg einer Polymerfettsäure (Pripol 3505, Unichema) und 5 kg Polydimethylsiloxan (Petrarch Chemicals, MG >150'000) und 5 kg
Polydiethylsiloxan (Wacker) während 60 min vermischt. Danach wurde das auf die beschriebene Weise modifizierte Magnesiumhydroxid ausgetragen.
Das erhaltene Produkt wurde darauf mit einem Polypropylen-Homopolymer (Vestolen P 8400, Hüls) in einem Einschneckengerät so zu einem Compound verarbeitet, dass der Anteil an Füllstoff 65 Gew.%, der Anteil Polymer 35 Gew.% beträgt.

### Beispiel 4

1000 kg Magnesiumhydroxid (Magnifin H 5 / Martinswerk GmbH, Bergheim, Deutschland) wurden in einem Intensivmischer mit 20 kg Undecyl-2-oxazolin während 28 min vermischt. Danach wurde das auf die beschriebene Weise modifizierte Magnesiumhydroxid ausgetragen. Das erhaltene Produkt wurde darauf mit einem Polypropylen-Homopolymer (Vestolen P 8400, Hüls) in einem Einschneckengerät so zu einem Compound verarbeitet, dass der Anteil an Füllstoff 65 Gew.%, der Anteil Polymer 35 Gew.% beträgt.

### Beispiel 5

1000 kg Magnesiumhydroxid (Magnifin H 5 / Martinswerk GmbH, Bergheim, Deutschland) wurden in einem Intensivmischer mit 10 kg Polydialkylsiloxan (CT 6000M,Wacker) und 2,5 kg einer Fettsäuremischung (Gehalt 70% C-18) während 28 min vermischt. Danach wurde das auf die beschriebene Weise modifizierte Magnesiumhydroxid ausgetragen.
Das erhaltene Produkt wurde darauf mit einem Polypropylen-Homopolymer (Vestolen P 8400, Hüls) in einem Einschneckengerät so zu einem Compound verarbeitet, dass der Anteil an Füllstoff 65 Gew.%, der Anteil Polymer 35 Gew.% beträgt.

### Beispiel 6

1000 kg eines natürlichen Brucits (spez. Oberfläche n. BET 6,3 m²/g; d₅₀ 2,6 µm) wurden in einem Intensivmischer mit 10 kg Fettsäuremischung (Gehalt 70% C-18) und 10 kg Polydimethylsiloxan (Silanol terminiert, PS 349.5, Petrarch Chemicals) während 30 min vermischt. Danach wurde das auf die beschriebene Weise modifizierte Magnesiumhydroxid ausgetragen.
Das erhaltene Produkt wurde darauf mit einem Polypropylen-Homopolymer (Vestolen P 8400, Hüls) in einem Einschneckengerät so zu einem Compound verarbeitet, dass der Anteil an Füllstoff 65 Gew.% der Anteil Polymer 35 Gew.% beträgt.

### Beispiel 7

1000 kg Magnesiumhydroxid (Magnifin H 5 / Martinswerk GmbH, Bergheim, Deutschland) wurden in einem Intensivmischer mit 18 kg Fettsäurederivat (Stearinsäure-glycidylmetacrylat) und 22 kg Polydimethylsiloxan (Petrarch Chemicals, MG 380'000, Viskosität 2·10⁶ cSt) während 60 min vermischt. Danach wurde das auf die beschriebene Weise modifizierte Magnesiumhydroxid ausgetragen.
Das erhaltene Produkt wurde darauf mit einem EVA Polymer (Escorene Ultra UL 00119, Exxon) in Gegenwart von 0,3 % Irganox 1010 als Stabilisator in einem Einschneckengerät so zu einem Compound verarbeitet, dass der Anteil Füllstoff 60 Gew.%, der Anteil Polymer 40 Gew.% beträgt.

### Beispiel 8

1000 kg Magnesiumhydroxid (Magnifin H 5 / Martinswerk GmbH, Bergheim, Deutschland) wurden in einem Intensivmischer mit 15 kg Fettsäuregemisch (Laurinsäure / Stearinsäure 1:1) und 25 kg Polydialkylsiloxan (PS 048, Petrarch Chemicals) und mit 2 kg Trägermaterial (AEROSIL® R972, Degussa) während 12 min vermischt. Danach wurde das auf die beschriebene Weise modifizierte Magnesiumhydroxid ausgetragen.
Das erhaltene Produkt wurde darauf mit einem EVA Polymer (Escorene Ultra UL 00119, Exxon) in Gegenwart von 0,3 % Irganox 1010 als Stabilisator in einem Einschneckengerät so zu einem Compound verarbeitet, dass der Anteil an Füllstoff 60 Gew.%, der Anteil Polymer 40 Gew.% beträgt.

### Beispiel 9

1000 kg eines natürlichen, gemahlenen Brucits (spez. Oberfläche n. BET 6,3 m²/g; d₅₀ 2,6 µm) wurden in einem Intensivmischer mit 8 kg Polymerfettsäure (Pripol 1009, Unichema) und 8 kg Polydialkylsiloxan (GE1046, General Electric) und 12,5 kg Polydialkylsiloxan (PS 340.5, Petrarch Chemicals) und mit AEROSIL® A 380, Degussa) während 10 min vermischt. Danach wurde das auf die beschriebene Weise modifizierte Magnesiumhydroxid ausgetragen. Das erhaltene Produkt wurde darauf mit einem EVA Polymer (Escorene Ultra UL 00119, Exxon) in Gegenwart von 0,3 % Irganox 1010 als Stabilisator in einem Einschneckengerät so zu einem Compound verarbeitet, dass der Anteil an Füllstoff 60 Gew.%, der Anteil Polymer 40 Gew.% beträgt.

### Beispiel 10

1000 kg Aluminiumhydroxid (Martinal® OL 104 LE / Martinswerk GmbH, Bergheim, Deutschland) wurden in einem Intensivmischer mit 19 kg eines Gemisches Laurinsäure / Polydimethylsiloxan (PS 347.5, Petrarch Chem.) und 4 kg Trägermaterial (AEROSIL® R 972, Degussa) während 48 min vermischt. Danach wurde das auf die beschriebene Weise modifizierte Aluminiumhydroxid ausgetragen.
Das erhaltene Produkt wurde darauf mit einem EVA Polymer (Escorene Ultra UL 00119, Exxon) in Gegenwart von 0,3 % Irganox 1010 als Stabilisator in einem Einschneckengerät so zu einem Compound verarbeitet, dass der Anteil an Füllstoff 60 Gew.%, der Anteil Polymer 40 Gew.% beträgt.

### Beispiel 11 (Vergleich)

10 kg Magnesiumhydroxid Kisuma 5A (Kyowa Chemical) wurden mit einem Polypropylen-Homopolymer (Vestolen P 8400, Hüls) in einem Einschneckengerät so zu einem Compound verarbeitet, dass der Anteil an Füllstoff 65 Gew.%, der Anteil Polymer 35 Gew.% beträgt.

### Beispiel 12 (Vergleich)

10 kg Magnesiumhydroxid FR 20/108 (Dead Sea Periclase Ltd.) wurden mit einem Polypropylen-Homopolymer (Vestolen P 8400, Hüls) in einem Einschneckengerät so zu einem Compound verarbeitet, dass der Anteil an Füllstoff 65 Gew.%, der Anteil Polymer 35 Gew.% beträgt.

### Beispiel 13 (Vergleich)

10 kg Magnesiumhydroxid Duhor N (Duslo) wurden mit einem Polypropylen-Homopolymer (Vestolen P 8400, Hüls) in einem Einschneckengerät so zu einem Compound verarbeitet, dass der Anteil an Füllstoff 65 Gew.%, der Anteil Polymer 35 Gew.% beträgt.

### Beispiel 14 (Vergleich)

10 kg Magnesiumhydroxid Kisuma 5A (Kyowa Chemical) wurden mit einem EVA Polymer (Escorene Ultra UL 00119, Exxon) in Gegenwart von 0,3% Irganox 1010 als Stabilisator in einem Einschneckengerät so zu einem Compound verarbeitet, dass der Anteil an Füllstoff 60 Gew.%, der Anteil Polymer 40 Gew.% beträgt.

### Beispiel 15 (Vergleich)

10 kg Magnesiumhydroxid FR 20/108 (Dead Sea Periclase Ltd.) wurden mit einem EVA Polymer (Escorene Ultra UL 00119, Exxon) in Gegenwart von 0,3 % Irganox 1010 als Stabilisator in einem Einschneckengerät so zu einem Compound verarbeitet, dass der Anteil an Füllstoff 60 Gew.%, der Anteil Polymer 40 Gew.% beträgt.

### Beispiel 16 (Vergleich)

10 kg Magnesiumhydroxid Duhor N (Duslo) wurden mit einem EVA Polymer (Escorene Ultra UL 00119, Exxon) in Gegenwart von 0,3% Irganox 1010 als Stabilisator in einem Einschneckengerät so zu einem Compound verarbeitet, dass der Anteil an Füllstoff 60 Gew.%, der Anteil Polymer 40 Gew.% beträgt.

Die in den vorstehenden Beispielen hergestellten Compounds wurden in einer Spritzgussmaschine des Typs BOY 30 T2 zu Spritzgussgiesstestkörpem verarbeitet und nachfolgenden Standard-Messungen unterzogen.
- Meltflow Index (MFI) nach DIN 53 735
- Zugfestigkeit nach DIN 53 455
- Reissdehnung nach DIN 53 455
- Zug E-Modul nach DIN 53 457
- Limiting oxygen Index (LOI) nach ASTM D-2863-77
- Schlagzähigkeitsprüfung nach Charpy nach DIN 53 453
   spez. Durchgangswiderstand nach DIN 53 482
- Brandverhalten gemäss UL-94 Test Standard der Underwriter Laboratories

**Tabelle:**

| Beispiel | MFI (230 °C / 5 kg) [g/10 min] | Zugfestigkeit [N/mm²] | Reissdehnung [m/m] | LOI | Zug-E-Modul [N/mm²] | Charpy (230 °C) [KJ/m²] | UL-94 (Klasse) | spez. Durchgangswiderst. [Ohm·cm] |
|---|---|---|---|---|---|---|---|---|
| 1 (PP) | 5 | 18 | 1,7 | - | 2800 | ohne Bruch | V-0 | 10¹⁵ |
| 2 (PP) | 9 | 18 | 1,8 | - | 2500 | " | " | " |
| 3 (PP) | 10 | 20 | 2,0 | - | 2300 | " | " | " |
| 4 (PP) | 5 | 20 | 1,5 | - | 2800 | " | " | " |
| 5 (PP) | 9 | 23 | 1,8 | - | 3000 | " | " | " |
| 6 (PP) | 8 | 15 | 2,0 | - | 2100 | " | " | " |
| 7 (EVA) | 3 | 10 | 4,8 | 60 | - | - | - | " |
| 8 (EVA) | 2,5 | 11 | 4,0 | 75 | - | - | - | " |
| 9 (EVA) | 3,5 | 8 | 3,0 | 50 | - | - | - | " |
| 10 (EVA) | 4,0 | 10 | 5,0 | 40 | - | - | - | " |
| 11 (PP) | 3,5 | 15 | 0,1 | - | 1700 | 45 | V-1 | - |
| 12 (PP) | nicht messbar | 17 | 0,01 | - | 2400 | 8 | - | - |
| 13 (PP) | " | 17 | 0,04 | - | 1600 | 30 | - | - |
| 14 (EVA) | 2,5 | 8 | 1,2 | 45 | - | - | - | 10¹³ |
| 15 (EVA) | «1 | 6 | 0,9 | 40 | - | - | - | 10¹¹ |
| 16 (EVA) | 2,0 | 6 | 1,2 | 38 | - | - | - | 10¹¹ |
| Vestolen P8400 (PP) | 7 | 23 | >0,5 | 23 | 800 | ohne Bruch | n.e.* | 10¹⁵ |
| Escorene Ultra UL 00119 (EVA) | 10 | 25 | >0,5 | 23 | - | - | n.e.* | " |

| | | | | | | | | |
|---|---|---|---|---|---|---|---|---|
| * nicht erreicht | | | | | | | | |

## Patentansprüche

1. Oberflächenmodifizierte Füllstoffzusammensetzung für thermoplastische Olefine oder thermoplastische Elastomere bestehend aus einem halogenfreien flammhemmenden Füllstoff der mit a) einem oder mehreren der Fettsäurederivate aus der Reihe der Polymerfettsäuren, der Ketofettsäuren oder der Fettalkyl-oxazoline oder -bisoxazoline und gegebenenfalls einem Siloxanderivat oder b) einer Fettsäure und einem Siloxanderivat oberflächenbehandelt ist.

2. Füllstoffzusammensetzung nach Patentanspruch 1, dadurch gekennzeichnet, dass eine pyrogene Kieselsäure oder eine Fällungskieselsäure in einer Menge von 0,1 bis 10 Teilen pro 100 Teilen halogenfreier flammhemmender Füllstoff enthalten ist.

3. Füllstoffzusammensetzung nach Patentanspruch 1 oder 2, dadurch gekennzeichnet, das als halogenfreier flammhemmender Füllstoff ein oder mehrere Hydroxide des Aluminiums und / oder ein oder mehrere Hydroxide des Magnesiums, gegebenenfalls in Mischung mit einem oder mehreren Oxiden des Aluminiums, des Magnesiums, des Titans oder des Zirkoniums oder mit weiteren Füllstoffmaterialien enthalten sind.

4. Füllstoffzusammensetzung nach einem der Patentansprüche 1 bis 3, dadurch gekennzeichnet, dass die Fettsäurederivate in einer Menge von 0,01 bis 10 Teilen pro 100 Teilen halogenfreier flammhemmender Füllstoff enthalten sind.

5. Füllstoffzusammensetzung nach einem der Patentansprüche 1 bis 4, dadurch gekennzeichnet, dass die Siloxanderivate in einer Menge von 0,01 bis 20 Teilen pro 100 Teilen halogenfreier flammhemmender Füllstoff enthalten sind.

6. Verwendung einer oberflächenmodifizierten Füllstoffzusammensetzung gemäss einem der Patentansprüche 1 bis 5 als halogenfreier flammhemmender Füllstoff in einer Menge von 5 Gew.% bis 90 Gew.% in thermoplastischen Olefinen oder thermoplastischen Elastomeren.

7. Thermoplastische Olefine oder thermoplastische Elastomeren enthaltend eine oberflächenmodifizierte Füllstoffzusammensetzung gemäss einem der Patentansprüche 1 bis 5.

## Claims

1. Surface-modified filler composition for thermoplastic olefins or thermoplastic elastomers, comprised of a halogen-free, flame-retarding filler substance surface-treated with a) one or several of the fatty acid derivatives of the series of polymer fatty acids, ketofatty acids or fatty alkyl oxazolines or bisoxazolines and optionally a siloxane derivative or b) a fatty acid and a siloxane derivative.

2. Filler composition according to claim 1, characterised in that a pyrogenic silica or a precipitation silica is contained in a quantity of 0.1 to 10 parts per 100 parts halogen-free flame-retarding filler substance.

3. Filler composition according to claim 1 or 2, characterised in that one or several hydroxides of aluminum and/or one or several hydroxides of magnesium, optionally in mixture with one or several oxides of aluminum, magnesium, titanium or zirconium or with other filler materials, are contained as a halogen-free, flame-retarding filler substance.

4. Filler composition according to any one of claims 1 to 3, characterised in that the fatty acid derivatives are contained in a quantity of 0.01 to 10 parts per 100 parts halogen-free, flame-retarding filler substance.

5. Filler composition according to any one of claims 1 to 4, characterised in that the siloxane derivatives are contained in a quantity of 0.01 to 20 parts per 100 parts halogen-free, flame-retarding filler substance.

6. Use of a surface-modified filler composition according to any one of claims 1 to 5 as a halogen-free, flame-retarding filler substance in a quantity of 5 wt.% to 90 wt.% in thermoplastic olefins or thermoplastic elastomers.

7. Thermoplastic olefins or thermoplastic elastomers containing a surface-modified filler composition according to any one of claims 1 to 5.

## Revendications

1. Composition de charge à surface modifiée destinée à des oléfines thermoplastiques et à des élastomères thermoplastiques constituée par une charge ignifuge exempte d'halogène qui est traitée en surface à l'aide a) d'un ou de plusieurs dérivés d'acides gras de la série des acides gras polymères, des acides cétoniques gras ou des alkyl gras oxazolines ou bisoxazolines et éventuellement d'un dérivé de siloxane ou b) d'un acide gras et d'un dérivé de siloxane.

2. Composition de charge selon la revendication 1, caractérisée en ce qu'une silice pyrogénique ou une silice précipitée est présente en une quantité de 0,1 à 10 parties pour 100 parties de charge ignifuge exempte d'halogène.

3. Composition de charge selon la revendication 2 ou 3, caractérisée en ce qu'un ou plusieurs hydroxydes d'aluminium et/ou un ou plusieurs hydroxydes de magnésium, éventuellement en mélange avec un ou plusieurs oxydes d'aluminium, de magnésium, de titane ou de zirconium ou avec d'autres matières de charge, sont présents en tant que charge ignifuge exempte d'halogène.

4. Composition de charge selon l'une des revendications 1 à 3, caractérisée en ce que les dérivés d'acides gras sont présents en une quantité de 0,01 à 10 parties pour 100 parties de charge ignifuge exempte d'halogène.

5. Composition de charge selon l'une des revendications 1 à 4, caractérisée en ce que les dérivés de siloxane sont présents en une quantité de 0,01 à 20 parties pour 100 parties de charge ignifuge exempte d'halogène.

6. Utilisation d'une composition de charge à surface modifiée selon l'une des revendications 1 à 5 en tant que charge ignifuge exempte d'halogène en une quantité de 5% en poids à 90% en poids dans des oléfines thermoplastiques ou des élastomères thermoplastiques.

7. Oléfines thermoplastiques ou élastomères thermoplastiques contenant une composition de charge à surface modifiée selon l'une des revendications 1 à 5.
